# EUROPÄISCHE PATENTSCHRIFT

(11) **EP 1 510 487 B1**
(45) Veröffentlichungstag und Bekanntmachung des Hinweises auf die Patenterteilung: **21.11.2012**
(21) Anmeldenummer: 04018815.3
(22) Anmeldetag: 09.08.2004
(51) Int. Cl.: G01N 29/27, B65H 23/02

(54) **Verfahren und Vorrichtung zum Erfassen der Lage einer Kante einer laufenden Warenbahn**
Method and apparatus for detecting the position of an edge of a running web
Procédé et dispositif de détection de la position d'un bord d'une bande de matériau en mouvement

(30) Priorität: 16.08.2003 DE 10337673
(43) Veröffentlichungstag der Anmeldung: 02.03.2005
(73) Patentinhaber: ERHARDT + LEIMER GmbH, D-86157 Augsburg (DE)
(72) Erfinder: Eisen, Jürgen, 86199 Augsburg (DE); Krauth, Wolfgang, 86316 Wulfertshausen (DE); Seibold, Hans, 86420 Anhausen (DE)
(74) Vertreter: Witzany, Manfred

(56) Entgegenhaltungen:
- US-A- 5 072 414
- US-A- 5 565 627
- US-A- 5 834 877

## Beschreibung

Die Erfindung betrifft ein Verfahren zum Erfassen der Lage der Kante einer laufenden Warenbahn gemäß dem Oberbegriff des Patentanspruchs 1 sowie eine Vorrichtung zur Durchführung dieses Verfahrens gemäß dem Oberbegriff des Patentanspruchs 7.

Aus der DE 34 42 154 C2 ist ein Verfahren zur Positionserfassung einer Bandkante einer Materialbahn bekannt. Dabei ist ein Ultraschallsender auf einen Ultraschalempfänger ausgerichtet, wobei zwischen beiden die Warenbahn geführt ist. Der Sender liefert Ultraschallpulse, die vom Empfänger dedektierbar sind. Dabei wird die zeitliche Korrelation zwischen der Abgabe des Ultraschallpulses und dessen Empfang bei der Auswertung der empfangenen Signale berücksichtigt. Insbesondere werden nur jene Empfangssignale berücksichtigt, die auf direktem Wege vom Sender zum Empfänger gelangen. Auf diese Weise werden Störimpulse durch Reflexionen an der Warenbahn oder anderen Teilen wirksam unterdrückt. Dieses Verfahren hat sich in der Praxis gut bewährt und bildet den Ausgangspunkt der vorliegenden Erfindung.

Aus der US-A-5 072 414 ist ein Ultraschall-Kantendetektor bekannt, der im Lichtschrankenprinzip sowie in Reflexionsanordnung arbeitet. Bei einer Anwendung der Reflexionsanordnung befinden sich Sender und Empfänger auf der gleichen Seite der Warenbahn, wobei unterschiedliche Bauelemente als Sender und Empfänger eingesetzt werden.

Aus der US-A-5 565 627 ist eine reflektive Anordnung eines Kantensensors bekannt, der ebenfalls getrennte Sender und Empfänger einsetzt.

Aus der US-A-5 834 877 ist ein weiterer Ultraschallsensor bekannt, der sowohl nach dem Lichtschrankenprinzip als auch in Reflexionsanordnung betrieben werden kann. In der Reflexionsanordnung soll die Bahn nicht parallel zu den Sensoren ausgerichtet sein, so daß Bahn selbst als Reflektor genutzt wird. Der Einsatz eines zusätzlichen Reflektorspiegels ist damit entbehrlich. Durch die Neigung der Bahn relativ zu den Sensoren wird erreicht, daß die Ultraschallpulse von der Warenbahn nicht zum Sender, sondern zum Empfänger reflektiert werden. Damit werden auch bei diesem Ultraschallsensor Sender und Empfänger durch verschiedene Bauelemente realisiert.

Der Erfindung liegt die Aufgabe zugrunde, ein Verfahren und eine Vorrichtung zur Durchführung dieses Verfahrens der eingangs genannten Art zu schaffen, die sich durch einen einfachen und störarmen Aufbau auszeichnen.

Diese Aufgabe wird erfindunggemäß mit den Merkmalen der Patentansprüche 1 und 7 gelöst.

Bei dem Verfahren gemäß Anspruch 1 geben piezoelektrische Elemente Ultraschall pulse gegen eine Warenbahn ab. Die Warenbahn ist dabei vorzugsweise für die Ultraschallpulse undurchlässig, höchstens teildurchlässig. Es spielt dabei keine Rolle, ob die Warenbahn die Ultraschallpulse reflektiert oder absorbiert oder eine Kombination aus beiden Effekten gegeben ist. Wichtig ist lediglich, daß die Ultraschallpulsenergie mit zunehmender Bedeckung der piezoelektrischen Elemente durch die Warenbahn abnimmt. Durch diese Abnahme der Pulsenergie kann die Bedeckung des piezoelektrischen Elements und damit die Position der Warenbahnkante ermittelt werden. In der Regel sind mehrere piezoelektrische Elemente nebeneinander quer zur Bahnlaufrichtung angeordnet, um einen ausreichend großen Meßbereich bei hoher Meßauflösung zu erhalten. Um einen einfachen und gleichzeitig störarmen Aufbau zu erzielen, werden die Ultraschallpulse von einem Reflektor gegen die piezoelektrischen Elemente reflektiert, die diese Ultraschallpulse zuvor abgegeben haben. Dabei wird die Warenbahn zwischen den piezoelektrischen Elementen und dem Reflektor angeordnet, so daß die Ultraschallpulse die Warenbahn zwei mal passieren müssen. Auf diese Weise wirkt sich der Transmissionskoeffizient der Warenbahn quadratisch verstärkt auf die Ultraschallpulse aus, so daß sich die Abhängigkeit der bei den piezoelektrischen Elementen ankommenden Schallenergie von der Bedeckung durch die Warenbahn entsprechend verstärkt. Auf diese Weise läßt sich die Kantenposition der Warenbahn entsprechend genauer bestimmen. Die piezoelektrischen Elemente dienen dabei sowohl zur Abgabe der Ultraschallpulse als auch zum Empfang der vom Reflektor reflektierten und von der Warenbahn gegebenenfalls geschwächten Ultraschallpulse. Diese werden durch die piezoelektrischen Elemente in elektrische Signale umgewandelt, deren Amplitude zur Bestimmung der Warenbahnkante ausgewertet wird. Auf diese Weise werden die piezoelektrischen Elemente doppelt genutzt, wodurch sich der Material- und Montageaufwand der Sensoranordnung entsprechend verringert. Zusätzlich besitzen Sender und Empfänger die gleiche Resonanzfrequenz, was die Effizienz des Systems verbessert. Außerdem ergibt sich der besondere Vorteil, daß die Sende- und Empfangseinheit auf derselben Seite der Warenbahn vorgesehen ist. Dadurch ergibt sich kein gabelartiger Aufbau der Sensoranordnung, der beim Ändern der Warenbahnbreite gegebenenfalls zur Zerstörung der Warenbahn und der Sensorelemente führen kann. Da der Reflektor ein verhältnismäßig einfach zu erstellendes und preisgünstiges Bauteil ist, kann sich dieser gegebenenfalls über die gesamte Maschinenbreite erstrekken, so daß eine Verstellung des Reflektors zur Anpassung an unterschiedliche Warenbahnbreiten entfallen kann. Damit muß lediglich die Sensoranordnung mit den piezoelektrischen Elementen verstellt werden, die durch die einseitig zur Warenbahn vorgesehene Anordnung jedoch den Warenbahnlauf in keiner Weise behindert. Vorzugsweise sind die piezoelektrischen Elemente oberhalb der Warenbahn angeordnet, so daß deren aktive Flächen nach unten gerichtet sind. Auf diese Weise ist die Verschmutzungsempfindlichkeit der Sensoranordnung gering. Da der Reflektor ein mechanisch sehr unempfindliches Bauteil darstellt, kann dieser sehr leicht, beispielsweise durch einen schwachen Luftstrom, sauber gehalten werden. Da die piezoelektrischen Elemente zunächst einen energiereichen Ultraschallpuls abgeben, bevor sie als Empfänger eingesetzt werden, müssen sich diese mechanisch und elektrisch beruhigen, bevor diese verwertbare Meßergebnisse liefern können. Aus diesem Grund beginnt die Auswertung der elektrischen Signale der piezoelektrischen Elemente erst nach Ablauf einer Totzeit nach Abgabe des Ultraschallpulses. Damit ist sichergestellt, daß Störungen der elektrischen Signale durch den zuvor abgegebenen Ultraschallpuls zuverlässig vermieden werden.

Zur Erzielung einer hohen Meßauflösung quer zur Bahnlaufrichtung ist es gemäß Anspruch 2 wichtig, die Ultraschallpulse quer zur Bahnlaufrichtung mit geringer Divergenz zu erzeugen. Um dennoch eine ausreichend hohe Pulsenergie abgeben zu können, ist es günstig, in Bahnlaufrichtung eine größere Divergenz der Ultraschallpulse vorzusehen. Zusätzlich ergibt sich dadurch der Vorteil, daß die Bahnkante über einen bestimmten Längenbereich gemittelt wird, so daß Störungen der laufenden Warenbahn, wie beispielsweise ausgefranste Kanten, bei der Erfassung der Bahnkante keinerlei Rolle spielen.

In der Regel ist es nicht möglich, die Umgebung um die Sensoranordnung frei von Teilen zu halten, die die Ultraschallpulse reflektieren können. Außerdem wird ein Teil der Ultraschallpulse auch von der Warenbahn reflektiert. Diese reflektierten Ultraschallpulse werden von den piezoelektrischen Elementen empfangen und in entsprechende elektrische Signale umgewandelt. Um zu vermeiden, daß diese unerwünschten Reflexionen das Meßergebnis verfälschen, ist es gemäß Anspruch 3 vorteilhaft, wenn die elektrischen Signale der piezoelektrischen Elemente nur innerhalb eines Zeitfensters ausgewertet werden. Die zeitliche Lage dieses Zeitfensters ist dabei vom Abstand des Reflektors zu den piezoelektrischen Elementen abhängig, wobei die Mitte dieses Zeitfensters vorzugsweise der doppelten Signallaufzeit zwischen den piezoelektrischen Elementen und dem Reflektor entspricht. Auf diese Weise werden nur die tatsächlich vom Reflektor reflektierten und ohne Umweg zum piezoelektrischen Element gelangenden Ultraschallpulse ausgewertet, so daß Störungen klein gehalten werden.

In der Regel ist die Höhenlage der Warenbahn nicht absolut konstant. Eine Veränderung der Höhenlage der Warenbahn kann jedoch das Meßergebnis verfälschen. Insbesondere ist zu berücksichtigen, daß aufgrund der vorhandenen Divergenz der Ultraschallpulse deren Abschwächung durch eine teilweise in den Schallkegel eintauchenden Warenbahn um so größer ist, je näher die Warenbahn bei den piezoelektrischen Elementen liegt. Um dieses Verhalten auszugleichen, ist es gemäß Anspruch 4 günstig, zusätzlich die Zeitdifferenz zwischen der Abgabe des Ultraschallpulses und einem elektrischen Signal der piezoelektrischen Elemente auszuwerten, welches von einer Reflexion des Ultraschallpulses durch die Warenbahn erzeugt wird. Aus dieser Zeitdifferenz kann sehr einfach die Entfernung der Warenbahn von den piezoelektrischen Elementen ermittelt werden, um hiermit die berechnete Bedeckung der piezoelektrischen Elemente durch die Warenbahn zu korrigieren. Auf diese Weise ergibt sich eine wesentliche Verbesserung der Meßgenauigkeit der Sensoranordnung. Zur Erzielung eines ausreichend starken Reflexionssignals der Warenbahn sind die piezoelektrischen Elemente vorzugsweise rechtwinkelig zur Ebene der Warenbahn ausgerichtet. Wird diese zusätzliche Auswertung des Reflexionssignals der Warenbahn nicht genutzt, so können die piezoelektrischen Elemente auch im spitzen Winkel zur Ebenenerstreckung der Warenbahn ausgerichtet werden. In diesem Fall geht das von der Warenbahn verursachte Reflexionssignal am Resonator 6 vorbei und wird daher nicht dedektiert.

Um eine ausreichend hohe Schallenergie zu erzielen, ist es gemäß Anspruch 5 günstig, die Ultraschallpulse von mehreren piezoelekrischen Elementen gleichzeitig zu erzeugen. Beispielsweise werden die Ultraschallpulse von drei nebeneinander angeordneten piezoelektrischen Elementen abgegeben. Zur Erzielung einer ausreichend hohen Ortsauflösung wird der reflektierte Ultraschallpuls jedoch nur von einem einzigen, vorzugsweise dem mittleren piezoelektrischen Element ausgewertet.

Zur Erzielung einer möglichst großen bei den piezoelektrischen Elementen ankommenden Schallenergie ist es gemäß Anspruch 6 vorteilhaft, wenn der Reflektor die Ultraschallpulse zumindest in Bahnlaufrichtung fokussiert. Auf diese Weise wirkt sich die vorhandene und gegebenenfalls auch gewollte Divergenz der Ultraschallpulse nicht negativ auf deren Dedektierbarkeit aus. Bei optimaler Fokussierung der Ultraschallpulse durch den Reflektor wird ein Großteil der abgegebenen Ultraschallenergie wieder auf die piezoelektrischen Elemente zurückgestrahlt, so daß sich ein entsprechend starkes und folglich rauscharmes elektrisches Signal zur Auswertung der Bedeckung durch die Warenbahn ergibt.

Die Vorrichtung gemäß Anspruch 7 hat sich zur Durchführung des Verfahrens bewährt. Sie weist piezoelektrische Elemente auf, die Ultraschallimpulse abgeben. Diese sind vorzugsweise quer zur Warenbahnlaufrichtung nebeneinander angeordnet, um einen ausreichend großen Meßbereich zur Lageerfassung der Warenbahnkante zu erzielen. Die von piezoelektrischen Elementen abgegebenen Ultraschallpulse werden von einem Reflektor reflektiert und die reflektierten Schallwellen wiederum von den piezoelektrischen Elementen dedektiert. Die piezoelektrischen Elemente dienen daher als Sende- und Empfangseinheit, so daß der gesamte Sensoraufbau einseitig zur Warenbahn vorgesehen ist. Die Warenbahn schwächt in Abhängigkeit von der Bedeckung der piezoelektrischen Elemente die Ultraschallpulse ab, so daß anhand der empfangenen Schallenergie die Bedeckung durch die Warenbahn und damit die Lage der Warenbahnkante ermittelt werden kann.

Zur Erzielung eines möglichst einfachen Aufbaus der Vorrichtung ist es gemäß Anspruch 8 günstig, die piezoelektrischen Elemente mit einem gemeinsamen Resonator zu koppeln, der sich im wesentlichen in Bahnlaufrichtung erstreckt. Dieser Resonator wird von den einzelnen piezoelektrischen Elementen räumlich selektiv angeregt, so daß die abgegebenen Ultraschallpulse eine sehr geringe Divergenz quer zur Bahnlaufrichtung aufweisen. In Bahnlaufrichtung ist die Divergenz der abgegebenen Ultraschallpulse erheblich größer, so daß die Vorrichtung auf kleine Störungen wie ausgefranste Kanten der Warenbahn nicht reagiert. Vorzugsweise sind die piezoelektrischen Elemente in Reihe hintereinander auf den Resonator aufgesetzt und durch schmale Spalten von weniger als 0,1 mm getrennt. Insbesondere ist daran gedacht, die piezoelektrischen Elemente einstückig zu erstellen und mit dem Resonator zu verbinden und erst anschließend durch entsprechende Schnitte voneinander zu trennen. Auf diese Weise ergibt sich eine besonders geringe Abweichung der Resonanzfrequenzen der einzelnen piezoelektrischen Elemente voneinander, was deren Auswertung erheblich vereinfacht.

Zur Erzielung einer Fokussierung der Ultraschallpulse durch den Reflektor ist es gemäß Anspruch 9 günstig, wenn der Reflektor in Bahnlaufrichtung betrachtet konkav gekrümmt ist.

Um eine möglichst optimale Fokussierung der Ultraschallpulse zu erzielen, ist es gemäß Anspruch 10 vorteilhaft, wenn der Reflektor einen Krümmungsmittelpunkt aufweist, der im Bereich der piezoelektrischen Elemente bzw. des Resonators liegt. Der Begriff "Krümmungsmittelpunkt" ist dabei in Projektion quer zur Bahnlaufrichtung zu verstehen. Im Falle einer zylindrischen Ausbildung des Reflektors liegen die Krümmungsmittelpunkte auf einer gemeinsamen Gerade, welche sich quer zur Bahnlaufrichtung erstreckt.

Insbesondere, wenn die abgegebenen Ultraschallpulse im wesentlichen nur in Bahnlaufrichtung divergieren, ist es nicht erforderlich, diese quer zur Bahnlaufrichtung zu fokussieren. In diesem Fall wird der Reflektor gemäß Anspruch 11 bevorzugt zylindrisch geformt, so daß er nur in Bahnlaufrichtung eine fokussierende Wirkung besitzt. Auf diese Weise ergibt sich eine besonders einfache Herstellbarkeit des Reflektors als Blechbiegeteil. Außerdem kann der Reflektor problemlos sehr lang gestaltet werden, so daß er den gesamten Bereich abdeckt, den die Warenbahn einnehmen kann. Damit ist es nicht erforderlich, den Reflektor verschiebbar zu gestalten, um ihn der Warenbahn nachzuführen. Es reicht vielmehr aus, den Reflektor stationär zu halten. Vorzugsweise besitzt der Reflektor eine kreis- oder parabelförmige Krümmung, um eine optimale Fokussierungswirkung zu erzielen.

Der Erfindungsgegenstand wird beispielhaft anhand der Zeichnung erläutert, ohne den Schutzumfang zu beschränken.

Es zeigt:
- Figur 1: eine räumliche Darstellung einer Vorrichtung zum Erfassen der Kantenposition einer laufenden Warenbahn und
- Figur 2: einen Prinzipschaltplan der Vorrichtung gemäß Figur 1.

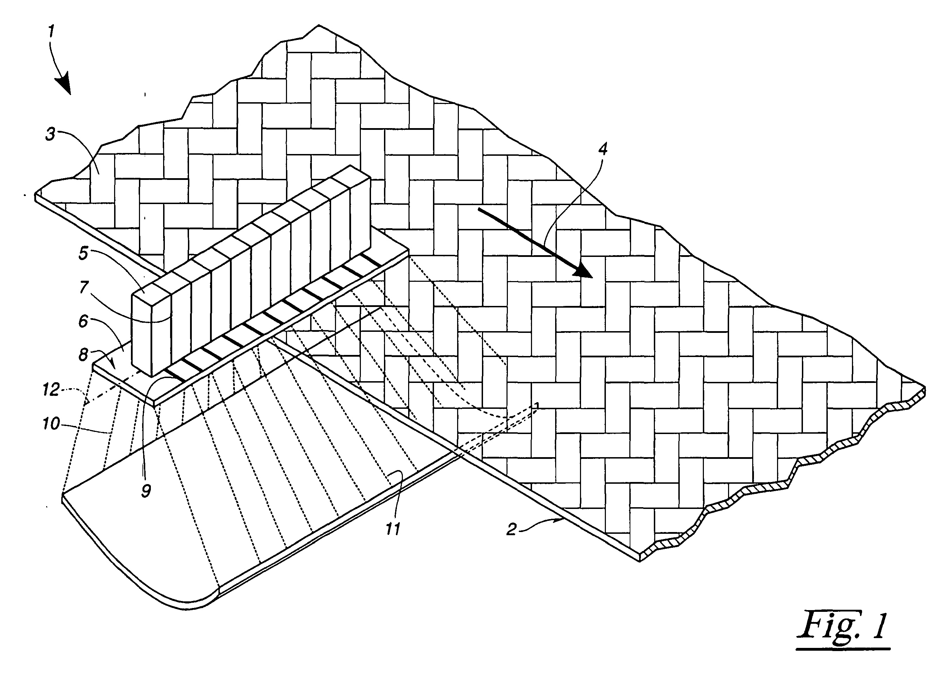

Die Figur 1 zeigt eine räumliche Darstellung einer Vorrichtung 1 zum Erfassen einer Kante 2 einer laufenden Warenbahn 3. Die Warenbahn 3 wird dabei in Richtung 4 bewegt, wobei sie in der Regel unerwünschte Bewegungen quer zur Bahnlaufrichtung 4 vollführt. Diese unerwünschten Querbewegungen führen zu einem Verlauf der Warenbahn 3 und werden durch entsprechende Warenbahnführer ausgeglichen, die den Bahnlauf ausregeln. Die Vorrichtung 1 dient dabei als Ist-Wert-Geber, um die jeweilige Kantenposition zu bestimmen.

Die Vorrichtung 1 zum Erfassen der Bahnkante 2 besteht im wesentlichen aus einer Anzahl nebeneinandergeordneter piezoelektrischer Elemente 5, die auf einem gemeinsamen Resonator 6 angebracht sind. Die piezoelektrischen Elemente 5 sind einstückig aus einem Kristall erstellt, mit dem Resonator verbunden und anschließend voneinander getrennt. Insbesondere ist daran gedacht, die piezoelektrischen Elemente 5 auf den Resonator 6 aufzulöten, wobei aufgedampfte oder aufgesputterte Elektroden als Lötpad dienen. Nach dem Aufbringen der noch einstückig verbundenen piezoelektrischen Elemente 5 auf den Resonator 6 werden diese durch Schnitte 7 voneinander getrennt, so daß sie unabhängig voneinander schwingen können. Auf diese Weise sind die geometrischen Abmessungen der einzelnen piezoelektrischen Elemente 5 innerhalb enger Toleranzen gleich, so daß alle piezoelektrischen Elemente 5 nahezu die gleiche Resonanzfrequenz aufweisen.

Der Resonator 6 besteht vorzugsweise aus einem Verbundwerkstoff, insbesondere glasfaserverstärktem Epoxiharz. Der Resonator 6 ist an seiner Oberfläche 8 mit einer Kupferkaschierung 9 versehen, aus der die erforderlichen Lötflächen und Anschlußleitungen zum Betrieb der piezoelektrischen Elemente 5 freigeätzt sind. Grundsätzlich ist auch daran gedacht, elektronische Bauelemente, insbesondere Multiplexer sowie gegebenenfalls Vorverstärker auf den Resonator 6 aufzulöten. Auf diese Weise wird der Verkabelungsaufwand erheblich reduziert, da nur eine sehr geringe Zahl von Leitungen zum Resonator 6 geführt werden muß.

Die piezoelektrischen Elemente 5 werden sowohl als Sender als auch als Empfänger eingesetzt und erzeugen Ultraschallpulse 10 mit einer Divergenz in Bahnlaufrichtung 4 zwischen 10° und 60°. Quer zur Bahnlaufrichtung 4, also in Meßrichtung der Vorrichtung 1 gesehen, ist die Divergenz der Ultraschallpulse 10 kleiner als 2° und damit vernachlässigbar gering. Dieser Unterschied in den Divergenzen der Ultraschallpulse 10 ergibt sich durch die geometrische Gestaltung des Resonators 6 mit seiner Längserstreckung quer zur Bahnlaufrichtung 4, so daß Beugungen in diese Richtung klein bleiben.

Den piezoelektrischen Elementen 5 liegt ein Reflektor 11 gegenüber, wobei die Warenbahn 3 zwischen den piezoelektrischen Elementen 5 und dem Reflektor 11 vorgesehen ist. Der Reflektor 11 reflektiert die auftreffenden Ultraschallpulse 10 zu den piezoelektrischen Elementen 5 zurück, die von diesen wiederum in elektrische Signale umgewandelt werden. Zur Erzielung eines hohen Signal-Rausch-Verhältnisses ist der Reflektor 11 quer zur Bahnlaufrichtung 4 betrachtet zylindrisch gekrümmt, wobei die Krümmungsmittelpunkte 12 im Bereich des Resonators 6 der piezoelektrischen Elemente 5 liegen. Auf diese Weise wird erreicht, daß die Ultraschallpulse 10 auf den Resonator 6 fokussiert werden, so daß eine maximal mögliche Schallenergie von den piezoelektrischen Elementen 5 dedektiert und in ein elektrisches Signal umgewandelt wird. Diese hohe Schallenergie ist insbesondere wichtig, um Störsignale, beispielsweise durch Reflexionen an umliegenden Gegenständen, wirksam unterdrücken zu können.

Die zwischen den piezoelektrischen Elementen 5 und dem Reflektor 11 angeordnete Warenbahn 3 deckt einen Teil der piezoelektrischen Elemente 5 ab, während der übrige Teil der piezoelektrischen Elemente 5 frei ist. Die Warenbahn 3 ist dabei derart ausgebildet, daß sie zumindest einen Teil der Ultraschallpulse 10 absorbiert und/oder reflektiert, so daß bei den durch die Warenbahn 3 abgedeckten piezoelektrischen Elementen 5 nur ein Bruchteil der Schallenergie im Verhältnis zu den nicht abgedeckten piezoelektrischen Elementen 5 ankommt. Dieser Unterschied wird dazu genutzt, festzustellen, unter welchem piezoelektrischen Element 5 sich die Warenbahnkante 2 befindet. Damit ist mit geringem Aufwand eine grobe Bestimmung der Kantenposition der Warenbahn 3 gegeben.

Zusätzlich wird bei jenem piezoelektrischen Element 5, unter dem sich die Warenbahnkante 2 befindet, das von diesem erzeugte elektrische Signal in seiner Amplitude ausgewertet. Aus dieser Auswertung kann unmittelbar der Grad der Bedeckung des piezoelektrischen Elements 5 durch die Warenbahn 3 ermittelt werden. Insbesondere ist daran gedacht, zur Umrechnung der Signalhöhe in die entsprechende Kantenposition entsprechende Eichwerte in einem Rechenwerk zu hinterlegen, aus denen eine Eichkurve interpoliert wird. Auf diese Weise ist eine exakte Linearisierung der Übertragungskennlinie der Vorrichtung 1 gewährleistet.

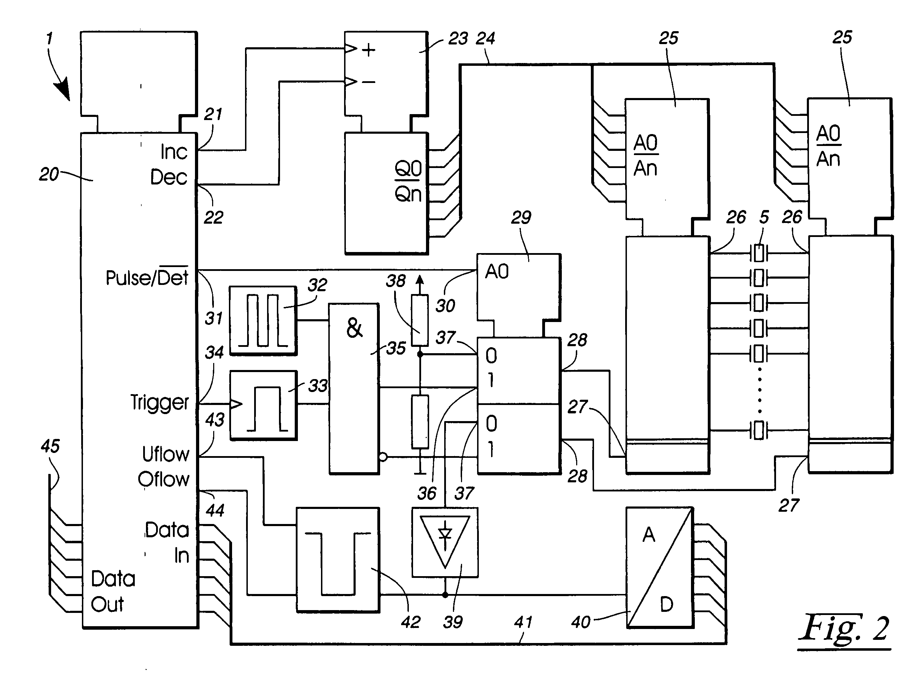

Die Figur 2 zeigt einen schematischen Schaltplan der Vorrichtung 1, wobei die piezoelektrischen Elemente 5 lediglich durch entsprechende Symbole angedeutet sind. Die Vorrichtung 1 weist einen Controller 20 auf, der die gesamte zeitliche Steuerung der Schaltung sowie die numerische Verarbeitung der Meßdaten erledigt.

Der Controller 20 steuert über einen Inkrementierausgang 21 und einen Dekrementierausgang 22 einen Vorwärts-Rückwärts-Zähler 23 an, dessen Zählerstand das aktivierte piezoelektrische Element 5 bestimmt. Der Vorwärts-Rückwärts-Zähler 23 ist über einen Adreßbus 24 mit zwei Analogmultiplexern 25 verbunden. Diese Analogmultiplexer 25 verbinden einen der Adresse auf dem Adreßbus 24 entsprechenden Ausgang 26 mit jeweils einem Eingang 27. Zwischen den Ausgängen 26 gleicher Wertigkeit ist jeweils eines der piezoelektrischen Elemente 5 geschaltet. Auf diese Weise wird erreicht, daß die beiden Eingänge 27 beider Analogmultiplexer 25 jeweils mit beiden Elektroden eines ausgewählten piezoelektrischen Elements 5 verbunden sind.

Die beiden Eingänge 27 der Analogmultiplexer 25 sind mit Ausgängen 28 eines weiteren Analogmultiplexers 29 verbunden, der als 2 aus 2-Multiplexer ausgebildet ist. Dieser Analogmultiplexer 29 weist einen Adreßeingang 30 auf, der mit einem Modusausgang 31 des Controllers 20 verbunden ist. Mit diesem Modusausgang 31 wird festgelegt, ob die piezoelektrischen Elemente 5 als Sender oder Empfänger betrieben werden.

Für den Sendebetrieb weist die Vorrichtung 1 einen Oszillator 32 auf, der gegebenenfalls auch vom Controller 20 getaktet sein kann. Zusätzlich ist ein Monoflop 33 vorgesehen, das von einem Triggerausgang 34 des Controllers 20 angesteuert wird. Der Oszillator 32 und das Monoflop 33 sind über ein Und-Gatter 35 verknüpft, welches aus den Schwingungen des Oszillators ein Pulspaket erzeugt. Dieses Pulspaket wird einerseits invertiert und andererseits nicht invertiert Eingängen 36 des Analogmultiplexers 29 zugeführt. Durch diese Maßnahme wird erreicht, daß die piezoelektrischen Elemente 5 mit der vollen Betriebsspannung betrieben werden, so daß sie ein größtmögliches Ausgangssignal abgeben.

Im Empfangsmodus sind die piezoelektrischen Elemente 5 mit Eingängen 37 des Analogmultiplexers 29 verbunden. Diese Eingänge 37 stehen zum einen mit einem Spannungsteiler 38 und zum anderen mit einem gleichrichtenden Signalverstärker 39 in Wirkverbindung. Der Spannungsteiler 38 dient lediglich zur Einstellung eines innerhalb der Betriebsspannungsgrenzen liegenden Arbeitspunktes für die piezoelektrischen Elemente 5. Der Signalverstärker 39 verstärkt das von den piezolektrischen Elementen 5 erzeugte elektrische Signal, um es einer Weiterverarbeitung zugänglich zu machen.

Der Signalverstärker 39 steht mit einem Analog-Digital-Umsetzer 40 in Wirkverbindung, der das verstärkte Signal in einen Digitalwert umformt. Dieser Digitalwert wird über einen Datenbus 41 dem Controller 20 zugeführt. Außerdem steht der Verstärker 39 mit einem Fensterkomperator 42 in Wirkverbindung, der die Signalamplituden mit einem oberen und einem unteren Grenzwert vergleicht. Bei Überschreitung des oberen und Unterschreitung des unteren Grenzwerts meldet der Fensterkomperator 42 dies dem Controller 20 durch aktive Signale an seinen Eingängen 43 bzw. 44.

Im folgenden wird der Betrieb der Vorrichtung 1 näher erläutert. Zu Beginn eines Meßzyklus muß zunächst grob die Warenbahnkante 2 gefunden werden. Dies kann beispielsweise dadurch erfolgen, daß der Controller den Zähler 23 zunächst löscht und anschließend über den Inkrementierausgang 21 sukzessive hochzählt. Alternativ ist auch daran gedacht, den Zähler 23 direkt vom Controller 20 zu laden, um schnellere Algorithmen wie beispielsweise eine sukzessive Approximation einsetzen zu können.

Nach jedem Anwählen einer neuen Adresse auf dem Adreßbus 24 wird ein bestimmtes piezoelektrisches Element 5 durch die Analogmultiplexer 25 ausgewählt. Der Modusausgang 35 des Controllers wird anschließend auf logisch 1 gebracht, um das ausgewählte piezoelektrische Element 5 mit dem Oszillator 32 zu verbinden. Durch einen Triggerimpuls auf den Triggerausgang 34 wird eine Pulsfolge des Oszillators 32 erzeugt, die auf das ausgewählte piezoelektrische Element 5 einwirkt. Diese Pulsfolge wird im piezoelektrischen Element 5 in eine mechanische Schwingung umgesetzt, die vom Resonator 6 abgegeben wird.

Sobald das Monoflop 33 wieder in seinen inaktiven Zustand zurückkehrt, ist die Pulsfolge abgeschlossen. Nach Abwarten einer gewissen, vom Controller 20 bestimmten Totzeit wird der Modusausgang 31 auf logisch 0 umgestellt, um das piezoelektrische Element 5 im Empfangsmodus zu betreiben. Dabei wird es mit dem Signalverstärker 39 verbunden und das verstärkte und gleichgerichtete Signal über den Analog-Digital-Umsetzer 40 und den Datenbus 41 an den Controller 20 abgegeben. Der Controller 20 nutzt von den auf dem Datenbus 41 ankommenden Daten nur jene, die zeitlich innerhalb etwa der doppelten Signallaufzeit zwischen dem piezoelektrischen Element 5 und dem Reflektor 11 ankommen. Die gemessene Signalstärke wird durch eine im Controller 20 abgelegte Eichkurve in eine Bedeckung des piezoelektrischen Elements 5 durch die Warenbahn 3 umgerechnet und an einen Datenbus 45 ausgegeben. Bei dieser Umrechnung wird zusätzlich der Zählerstand des Zählers 23 berücksichtigt, der bestimmt, welches piezoelektrische Element 5 bei der Messung aktiviert war.

Meldet der Fensterkomperator 42 an den Eingängen 43 oder 44 einen Unterlauf oder Überlauf der Signalstärke, so zeigt dies, daß sich die Warenbahnkante 2 nicht mehr unter dem ausgewählten piezoelektrischen Element 5 befindet. Je nachdem, ob ein Überlauf oder ein Unterlauf angezeigt wurde, liefert der Controller 20 an seinem Inkrementierausgang 21 oder seinem Dekrementierausgang 22 einen Puls, um den Zähler 23 aufwärts bzw. abwärts zu zählen. Dieser Vorgang wird so lange wiederholt, bis der Überlauf bzw. Unterlauf beseitigt ist. Selbstverständlich ist es auch denkbar, die Funktion des Fensterkomperators 42 im Controller 20 durch Software zu realisieren, der die auf dem Datenbus 41 ankommenden Daten entsprechend auswertet. Grundsätzlich können alle beschriebenen Komponenten durch den Controller 20 realisiert werden, um die piezoelektrischen Elemente 5 anzusteuern.

### Bezugszeichenliste

- 1: Vorrichtung
- 2: Bahnkante
- 3: Warenbahn
- 4: Bahnlaufrichtung
- 5: piezoeltkrisches Element
- 6: Resonator
- 7: Schnitt
- 8: Oberfläche
- 9: Kupferkaschierung
- 10: Ultraschallpuls
- 11: Reflektor
- 12: Krümmungsmittelpunkt
- 20: Controller
- 21: Inkrementierausgang
- 22: Dekrementierausgang
- 23: Vorwärts-Rückwärts-Zähler
- 24: Adreßbus
- 25: Analogmultiplexer
- 26: Ausgang
- 27: Eingang
- 28: Ausgang
- 29: Analogmultiplexer
- 30: Adreßeingang
- 31: Modusausgang
- 32: Oszillator
- 33: Monoflop
- 34: Triggerausgang
- 35: Und-Gatter
- 36: Eingang
- 37: Eingang
- 38: Spannungsteiler
- 39: Signalverstärker
- 40: Analog-Digital-Umsetzer
- 41: Datenbus
- 42: Fensterkomperator
- 43: Eingang
- 44: Eingang
- 45: Datenbus

## Patentansprüche

1. Verfahren zum Erfassen der Lage einer Kante (2) einer laufenden Warenbahn (3), bei dem piezoelektrische Elemente (5) Ultraschallpulse (10) gegen die Warenbahn (3) abgeben, wobei die Warenbahn (3) höchstens einen Teil der auftreffenden Schallenergie durchlässt, wobei die Ultraschallpulse (10) von einem Reflektor (11) gegen die piezoelektrischen Elemente (5) reflektiert werden, welche die reflektierten Ultraschallpulse empfangen und in elektrische Signale umwandeln, wobei die Warenbahn (3) zwischen den piezoelektrischen Elementen (5) und dem Reflektor (11) angeordnet wird, **dadurch gekennzeichnet, daß** die elektrischen Signale der piezoelektrischen Elemente (5) erst nach Ablauf einer Totzeit nach Abgabe des Ultraschallpulses (10) zur Ermittlung der Kantenposition der Warenbahn (3) ausgewertet werden.

2. Verfahren nach Anspruch 1, **dadurch gekennzeichnet, daß** die piezoelektrischen Elemente (5) die Ultraschallpulse (10) mit einer Divergenz erzeugen, welche in Bahnlaufrichtung (4) größer als quer zu dieser ist.

3. Verfahren nach Anspruch 1 oder 2, **dadurch gekennzeichnet, daß** die elektrischen Signale der piezoelektrischen Elemente (5) nur innerhalb eines vom Abstand des Reflektors (11) abhängigen Zeitfensters zur Ermittlung der Kantenposition der Warenbahn (3) ausgewertet werden.

4. Verfahren nach mindestens einem der Ansprüche 1 bis 3, **dadurch gekennzeichnet, daß** die Zeitdifferenz zwischen der Abgabe des Ultraschallpulses (10) und einem elektrischen Signal der piezoelektrischen Elemente (5) erfaßt wird, welches von einer Reflexion des Ultraschallpulses (10) durch die Warenbahn (3) erzeugt wird und aus dieser Zeitdifferenz die Entfernung der Warenbahn (3) von den piezoelektrischen Elementen (5) ermittelt wird.

5. Verfahren nach mindestens einem der Ansprüche 1 bis 4, **dadurch gekennzeichnet, daß** die Ultraschallpulse (10) von mehreren piezoelektrischen Elementen (5) gleichzeitig abgestrahlt werden, wobei nur das elektrische Signal eines dieser piezoelektrischen Elemente (5) ausgewertet wird.

6. Verfahren nach mindestens einem der Ansprüche 1 bis 5, **dadurch gekennzeichnet, daß** der Reflektor (11) die Ultraschallpulse (10) zumindest in Bahnlaufrichtung (4) fokussiert.

7. Vorrichtung zum Erfassen der Lage einer Kante (2) einer laufenden Warenbahn (3), wobei die Vorrichtung (1) Ultraschallpulse (10) abgebende piezoelektrische Elemente (5) aufweist, die gegen die Warenbahn (3) gerichtet sind, welche höchstens einen Teil der auftreffenden Schallenergie durchläßt, wobei den piezoelektrischen Elementen (5) ein Reflektor (11) gegenüberliegt, wobei die piezoelektrischen Elemente (5) die vom Reflektor (11) reflektierten Ultraschallpulse empfangen und in elektrische Signale umwandeln können, und die Warenbahn (3) zwischen den piezoelektrischen Elementen (5) und dem Reflektor (11) vorgesehen ist, **dadurch gekennzeichnet, daß** die elektrischen Signale der piezoelektrischen Elemente (5) erst nach Ablauf einer Totzeit nach Abgabe des Ultraschallpulses (10) zur Ermittlung der Kantenposition der Warenbahn (3) ausgewertet werden.

8. Vorrichtung nach Anspruch 7, **dadurch gekennzeichnet, daß** die piezoelektrischen Elemente (5) mit einem gemeinsamen Resonator (6) gekoppelt sind, der sich im wesentlichen quer zur Bahnlaufrichtung (4) erstreckt.

9. Vorrichtung nach Anspruch 7 oder 8, **dadurch gekennzeichnet, daß** der Reflektor (11) in Bahnlaufrichtung (4) betrachtet konkav gekrümmt ist.

10. Vorrichtung nach Anspruch 9, **dadurch gekennzeichnet, daß** der Reflektor (11) einen Krümmungsmittelpunkt (12) aufweist, der im Bereich der piezoelektrischen Elemente (5) und/oder des Resonators (6) liegt.

11. Vorrichtung nach mindestens einem der Ansprüche 7 bis 10, **dadurch gekennzeichnet, daß** der Reflektor (11) zylindrisch geformt ist.

## Claims

1. Method for detecting the position of an edge (2) of a moving product web (3), in which piezoelectric elements (5) output ultrasonic pulses (10) toward the product web (3), the product web (3) letting through at most some of the incident sound energy, **characterized in that** the ultrasonic pulses (10) being reflected by a reflector (11) toward the piezoelectric elements (b), which receive the reflected ultrasonic pulses and convert them into electrical signals, the product web (3) being arranged between the piezoelectric elements (5) and the reflector (11) **characterized in that** the electrical signals from the piezoelectric elements (5) are evaluated only after the expiry of a dead time following the output of the ultrasonic pulse (10) for determining the edge position of the product web (3).

2. Method according to Claim 1, **characterized in that** the piezoelectric elements (5) generate the ultrasonic pulses (10) with a divergence which is greater in the web running direction (4) than transversely with respect to the latter.

3. Method according to Claim 1 or 2, **characterized in that** the electrical signals from the piezoelectric elements (5) are evaluated only within a time window, dependent on the distance of the reflector (11), for determining the edge position of the product web (3).

4. Method according to at least one of Claims 1 to 3, **characterized in that** the time difference between the output of the ultrasonic pulse (10) and an electrical signal from the piezoelectric elements (5) is registered, which signal is generated from a reflection of the ultrasonic pulse (10) by the product web (3) and the distance of the product web (3) from the piezoelectric elements (5) is determined from this time difference.

5. Method according to at least one of Claims 1 to 4, **characterized in that** the ultrasonic pulses (10) are emitted simultaneously by a plurality of piezoelectric elements (5), only the electrical signal from one of these piezoelectric elements (5) being evaluated.

6. Method according to at least one of Claims 1 to 5, **characterized in that** the reflector (11) focuses the ultrasonic pulses (10), at least in the web running direction (4).

7. Apparatus for detecting Lhe position of an edge (2) of a moving product web (3), the apparatus (1) having piezoelectric elements (5) that output ultrasonic pulses (10) which are aimed at the product web (3), which lets through at most some of the incident sound energy, **characterized in that** a reflector (11) being located opposite the piezoelectric elements (5), it being possible for the piezoelectric elements (5) to receive the ultrasonic pulses reflected from the reflector (11) and to convert them into electrical signals, and the product web (3) being provided between the piezoelectric elements (5) and the reflector (11), **characterized in that** the electrical signals from the piezoelectric elements (5) are evaluated only after the expiry of a dead time following the output of the ultrasonic pulse (10) for determining the edge position of the product web (3).

8. Apparatus according to Claim 7, **characterized in that** the piezoelectric elements (5) are coupled to a common resonator (6), which extends substantially transversely with respect to the web running direction (4).

9. Apparatus according to Claim / or 8, **characterized in that** the reflector (11) is curved concavely as viewed in the web running direction (4).

10. Apparatus according to Claim 9, **characterized in that** the reflector (11) has a center of curvature (12) which is located in the region of the piezoelectric elements (5) and/or of the resonator (6)

11. Apparatus according to at least one of Claims 7 to 10, **characterized in that** the reflector (11) is shaped cylindrically.

## Revendications

1. Procédé de détection de la position d'un bord (2) d'une bande de matériau en mouvement (3), dans lequel des éléments piézoélectriques (5) émettent des impulsions ultrasoniques (10) contre la bande de matériau (3), la bande de matériau (3) laissant passer tout au plus une partie de l'énergie acoustique percutante, les impulsions ultrasoniques (10) étant réfléchies par un réflecteur (11) contre les éléments piézoélectriques (5) recevant les impulsions ultrasoniques réfléchies et les transformant en signaux électriques, la bande de matériau (3) étant disposée entre les éléments piézoélectriques (5) et le réflecteur (11), **caractérisé en ce que** les signaux électriques des éléments piézoélectriques (5) ne sont analysés qu'après écoulement d'un temps mort après l'émission de l'impulsion ultrasonique (10) pour calculer la position du bord de la bande de matériau (3).

2. Procédé selon la revendication 1, **caractérisé en ce que** les éléments piézoélectriques (5) produisent les impulsions ultrasoniques (10) avec une divergence plus importante dans la direction de déplacement de la bande (4) que transversalement par rapport à elle.

3. Procédé selon la revendication 1 ou 2, **caractérisé en ce que** les signaux électriques des éléments piézoélectriques (5) ne sont analysés qu'à l'intérieur d'une plage de temps dépendant de la distance du réflecteur (11) pour calculer la position du bord de la bande de matériau (3).

4. Procédé selon au moins l'une quelconque des revendications 1 à 3, **caractérisé en ce que** l'on détecte la différence de temps entre l'émission de l'impulsion ultrasonique (10) et un signal électrique des éléments piézoélectriques (5) produit par une réflexion de l'impulsion ultrasonique (10) à travers la bande de matériau (3) et que l'on calcule à partir de cette différence de temps l'éloignement de la bande de matériau (3) par rapport aux éléments piézoélectriques (5).

5. Procédé selon au moins l'une quelconque des revendications 1 à 4, **caractérisé en ce que** les impulsions ultrasoniques (10) sont émises simultanément par plusieurs éléments piézoélectriques (5), seul le signal électrique d'un de ces éléments piézoélectriques (5) étant analysé.

6. Procédé selon au moins l'une quelconque des revendications 1 à 5, **caractérisé en ce que** le réflecteur (11) focalise les impulsions ultrasoniques (10) au moins dans la direction de déplacement de la bande (4).

7. Dispositif de détection de la position d'un bord (2) d'une bande de matériau en mouvement (3), le dispositif (1) comportant des éléments piézoélectriques (5) émettant des impulsions ultrasoniques (10), lesdits éléments étant orientés contre la bande de matériau (3) laissant passer tout au plus une partie de l'énergie acoustique percutante, un réflecteur (11) étant placé en face des éléments piézoélectriques (5), les éléments piézoélectriques (5) recevant les impulsions ultrasoniques réfléchies par le réflecteur (11) et prouvant les convertir en signaux électriques et la bande de matériau (3) étant prévue entre les éléments piézoélectriques (5) et le réflecteur (11), **caractérisé en ce que** les signaux électriques des éléments piézoélectriques (5) ne sont analysés qu'après écoulement d'un temps mort après l'émission de l'impulsion ultrasonique (10) pour calculer la position du bord de la bande de matériau (3).

8. Dispositif selon la revendication 7, **caractérisé en ce que** les éléments piézoélectriques (5) sont couplés à un résonateur (6) commun s'étendant pour l'essentiel transversalement à la direction de déplacement de la bande (4).

9. Dispositif selon la revendication 7 ou 8, **caractérisé en ce que** vu dans le plan concave, le réflecteur (11) est coudé dans la direction de déplacement de la bande (4).

10. Dispositif selon la revendication 9, **caractérisé en ce que** le réflecteur (11) comporte un point médian de courbure (12) situé dans la région des éléments piézoélectriques (5) et/ou du résonateur (6).

11. Dispositif selon au moins l'une quelconque des revendications 7 à 10, **caractérisé en ce que** le réflecteur (11) prend une forme cylindrique.
